# EUROPEAN PATENT APPLICATION

(11) **EP 4 675 735 A1**
(43) Date of publication of application: **07.01.2026**
(21) Application number: 24763765.5
(22) Date of filing: 22.02.2024
(51) Int. Cl.: H01M 10/052, H01M 4/66, H01M 4/139, H01M 10/0562, H01M 10/0585

(54) **METHOD OF MANUFACTURING ALL-SOLID-STATE BATTERY**

(30) Priority: 28.02.2023 JP 2023029703
(71) Applicant: Sanoh Industrial Co., Ltd., Shibuya-ku Tokyo 150-0002 (JP)
(72) Inventor: MAEDA, Yu, Koga-shi, Ibaraki 306-0041 (JP); SAKAGUCHI, Yoshiki, Koga-shi, Ibaraki 306-0041 (JP)
(74) Representative: Bryn Aarflot AS
(86) International application number: PCT/JP2024/006450
(87) International publication number: WO 2024/181284

(57) **Abstract**

A method of manufacturing an all-solid-state battery having an improved contact state between an electrode layer and a solid electrolytic layer and achieving charging/discharging without pressurization during use of the all-solid-state battery is provided. The means for this adopts a method of manufacturing an all-solid-state battery including: a step of forming slurry by kneading raw materials including an electrode active material; a step of applying the slurry onto a current collector; a step of stacking a solid electrolytic layer onto the applied slurry; and a vacuum-drying step of forming an electrode layer by vacuum-drying the slurry on which the solid electrolytic layer is stacked.

## Description

### TECHNICAL FIELD

The present invention relates to a method of manufacturing an all-solid-state battery, and particularly to a method of manufacturing an all-solid-state battery having an improved contact state between an electrode layer and a solid electrolytic layer.

### BACKGROUND ART

Secondary batteries such as lithium ion secondary batteries capable of achieving relatively high power and high capacity have been used for power supplies each mounted in a vehicle or the like using electricity as a driving source and power supplies each mounted in an electrical product or the like such as a personal computer or a mobile terminal. Among these secondary batteries, such a lithium ion secondary battery is particularly light in weight and has a high energy density, and is preferable as a high power supply for driving a vehicle such as an electric vehicle (EV), a plug-in hybrid vehicle (PHV) and a hybrid vehicle (HV), and the increase in demand for this will be expected in the future.

In addition, in recent years, as one form of the secondary battery, a battery in a form using a solid electrolyte such as a powder-like electrolyte, a pellet-like electrolyte, a plate-like electrolyte molded by sintering or the like, instead of a liquid electrolyte (electrolytic solution), the battery being so-called all-solid-state battery, has been variously researched and developed for the practical use.

Since the all-solid-state battery does not use the liquid electrolyte (particularly non-aqueous electrolytic solution) to ensure the contact between electrodes, a stacked electrode body having a stacked structure made of a positive electrode layer, a negative electrode layer, and a solid electrolytic layer can be easily structured without performing a complicated processing in a case of handling an organic solvent such as the non-aqueous electrolytic solution.

In addition, since no electrolytic solution is used, the structure of the electrode body is simple, this can also contribute to improvement in the battery capacity per battery unit volume. Further, since no electrolytic solution is used, safety is high.

Incidentally, the all-solid-state battery includes the solid electrolytic layer as described above, and all constituent materials of the battery are solid, and therefore, contact and bonding between the constituent materials may be insufficient. Techniques for improving the contact and bonding have been enthusiastically studied. For example, Patent Document 1 discloses a technique for improving a bonding strength between a current collector layer and an active material layer formed in contact therewith since the bonding strength tends to be insufficient.

### RELATED ART DOCUMENT

### PATENT DOCUMENT

[Patent Document 1] Japanese Patent No. 6992802

### SUMMARY OF THE INVENTION

### PROBLEMS TO BE SOLVED BY THE INVENTION

In addition, the solid electrolytic layer and the electrode layer in the all-solid-state battery are manufactured by separately manufacturing these members and then stacking the obtained plate-like solid electrolyte and electrode to be in contact with each other. This manufacturing method is a general method of manufacturing the all-solid-state battery.

However, the all-solid-state battery obtained as described above cannot be sufficiently charged and discharged in its stacked state in many cases. Therefore, during use, the all-solid-state battery manufactured as described above is usually pressurized in a stacking direction or heated in addition to pressurization in order to improve the contact state between the solid electrolytic layer and the electrode layer. By the pressurization and the heating, the contact state between the members is improved. However, in this case, the all-solid-state battery must be charged and discharged while holding the state.

Therefore, conventionally-known all-solid-state batteries may not be sufficiently charged and discharged depending on conditions during use. A special configuration (such as a member for appropriately pressurizing the all-solid-state battery, pressurization means therefor, and a housing (package) for housing a rechargeable battery, and the like) is necessary for holding the pressurized state of the all-solid-state battery.

An objective of the present invention is to provide a method of manufacturing an all-solid-state battery having an improved contact state between a solid electrolytic layer and an electrode layer.

The method of manufacturing the all-solid-state battery according to the present embodiment includes: a step of forming slurry by kneading raw materials including an electrode active material; a step of applying the slurry onto a current collector; a step of stacking a solid electrolytic layer onto the applied slurry; and a step of forming an electrode layer by vacuum-drying the slurry on which the solid electrolytic layer is stacked.

### EFFECTS OF THE INVENTION

According to the method of manufacturing the all-solid-state battery in the present embodiment, the all-solid-state battery having the improved contact state between the solid electrolytic layer and the electrode layer and achieving efficient charging/discharging can be provided.

### BRIEF DESCRIPTIONS OF THE DRAWINGS

[FIG. 1] is a flowchart for explaining a method of manufacturing an all-solid-state battery according to the present embodiment.
[FIG. 2] is a diagram for explaining the method of manufacturing the all-solid-state battery according to the present embodiment.
[FIG. 3] is a diagram illustrating a schematic configuration of an all-solid-state battery according to the present embodiment.
[FIG. 4] is a diagram illustrating a result of an examination example of an all-solid-state battery obtained in Working Example 1.

### BEST MODE FOR CARRYING OUT THE INVENTION

Hereinafter, embodiments of the present invention will be described in detail with reference to the examples and the accompanying drawings. Note that components having the same function are denoted with the same or similar reference symbols throughout all the drawings for describing the embodiments, and the repetitive description thereof will be omitted.

### [Method of Manufacturing All-Solid-State Battery]

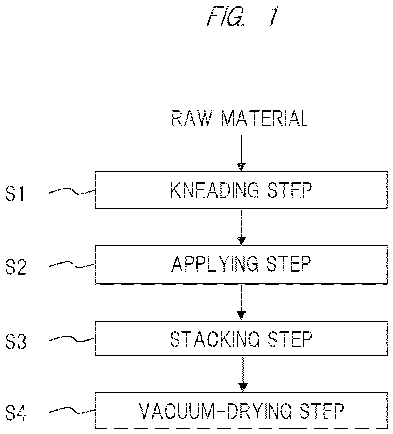

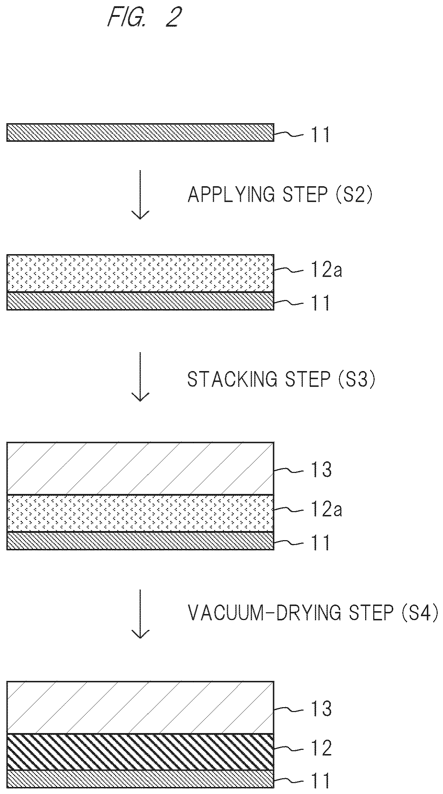

As described above, the method of manufacturing the all-solid-state battery according to the present embodiment includes: a step of forming slurry by kneading raw materials including an electrode active material; a step of applying the slurry onto a current collector; a step of stacking a solid electrolytic layer onto the applied slurry; and a step of forming an electrode layer by vacuum-drying the slurry on which the solid electrolytic layer is stacked. Each step will be described below in detail with reference to FIGs. 1 and 2.

### [Kneading Step (S1)]

Before forming the slurry, the raw materials used as the electrode material are prepared. As the raw materials prepared herein, the electrode active material is an essential component, and the materials can also include a conductive aid, a binder, a solid electrolyte and the like. Other components may be added or mixed thereto in a range not interrupting the functions and the advantages serving as the effects of the present embodiment.

Also, solvent may be used at the same time in order to adjust a viscosity of the slurry formed by this kneading step (S1). Examples of the solvent used herein is organic solvent such as N-methyl-2-pyrrolidone (NMP), pyrrolidone, N-methyl-thiopyrrolidone, dimethylformamide (DMF), dimethylacetamide, hexamethylphosphoramide, cyclohexanone, methyl isobutyl ketone, methyl ethyl ketone and the like, pure water (such as H₂O including ion-exchange water) and the like.

The prepared various raw materials and solvent are mixed and kneaded to be in a uniform state to form the slurry (FIG. 1 - Kneading Step (S1)). The slurry formed herein is preferably in a sufficiently defoamed state, and a defoaming/stirring process is preferable.

This kneading step (S1) can adopt, for example, a publicly-known defoaming mixing process method such as a vacuum-decompression process, an ultrasonic process, a centrifugal process and a revolution-rotation mixing process. Particularly, the revolution-rotation mixing process is preferable. As a process condition in the case of the adoption of the revolution-rotation mixing process, for example, a rotation speed of a revolution-rotation mixer is preferably 100 rpm to 1000 rpm, more preferably 500 rpm to 750 rpm. In addition, a revolution speed thereof is preferably 200 rpm to 2000 rpm, more preferably 1000 rpm to 1500 rpm.

A temperature at this time may be lower than 150°C, or this step can be performed at an ordinary temperature (25°C). As to a pressure, this step can be performed at an ordinary pressure (1 atmospheric pressure). In a reduced pressure case, the pressure may be, for example, about 1.0 kPa to 0.50 kPa.

As described above, since the slurry is formed by the defoaming mixing process, the raw materials are uniformly mixed, and sufficiently defoamed.

### [Applying Step (S2)]

Subsequently, the slurry formed by the kneading step (S1) is applied onto a current collector in order to form a plate-like electrode (FIG. 1 - Applying Step (S2)). As illustrated in FIG. 2, by this step, a state in which a slurry 12a is applied on a current collector 11 is provided.

In this applying step (S2), it is only necessary to apply the formed slurry onto the current collector 11 to form a coat film with a desirable thickness, and a publicly-known applying method can be used without any particular limitation. Examples of this applying method are extrusion coating, gravure coating, reverse roll coating, dip coating, applicator coating, doctor coating, screen print coating and others.

In this applying step (S2), any slurry 12a is applicable if being enabled to be applied on the current collector 11 as described above. For example, a viscosity thereof is preferably 1000 to 50000 mPa·s, more preferably 5000 to 25000 mPa·s, still more preferably 8000 to 12000 mPa·s. Note that the term "viscosity" described in the present specification means a viscosity provided at an ordinary temperature (25°C) unless otherwise being particularly described under a different condition.

A thickness of the slurry 12a in this coating is, for example, preferably 10 µm to 150 µm, more preferably10 µm to 100 µm, still more preferably 10 µm to 50 µm.

Any current collector 11 on which the slurry is to be applied is applicable if being of a plate shape enabling the stable coat film to be formed, and can be used without any particular limitation. This current collector 11 may be a substance in which a current collector made of a metal film or the like is formed on a substrate surface.

Any current collector 11 is applicable if being an electronic conductor that does not chemically react in a battery, and a publicly-known material can be used without any particular limitation.

For the current collector 11 used herein, a positive electrode current collector or a negative electrode current collector can be used, and a current collector concerned depending on the electrode to be formed is used. Note that the more detailed configuration of the materials of the positive electrode current collector and the negative electrode current collector will be described below as a configuration of an all-solid-state battery.

### [Stacking Step (S3)]

Subsequently, a step of stacking a solid electrolytic layer 13 on the slurry applied on the current collector formed by the applying step (S2) is performed (FIG. 1 - Stacking Step (S3)). As illustrated in FIG. 2, by this step, a state in which the solid electrolytic layer 13 is stacked on the slurry 12a that is stacked on the current collector 11 is provided.

In this step, the plate-like solid electrolyte configuring the solid electrolytic layer 13 of the all-solid-state battery is prepared. Any plate-like solid electrolyte used herein is applicable without any particular limitation if being capable of configuring a publicly-known solid electrolytic layer used for the all-solid-state battery.

This solid electrolytic layer 13 is a member that is formed between a positive electrode layer and a negative electrode layer and is in contact with the positive electrode layer and the negative electrode layer so that a charge carrier such as lithium ion is movable therebetween. This solid electrolytic layer 13 also plays a role of a separator, and is functioned to prevent short-circuit between the positive electrode layer and the negative electrode layer while transmitting the lithium ion. Note that the more detailed configuration of the materials of the solid electrolytic layer 13 and the like will be described later as the configuration of the all-solid-state battery.

This plate-like solid electrolyte is stacked and arranged on the slurry 12a applied on the current collector 11 before the slurry 12a is vacuum-dried.

This stacking is preferably performed so that the viscosity of the slurry applied by the applying step (S2) does not largely change after the application of the slurry. Note that the viscosity of the slurry in this stacking is, for example, preferably 5000 to 50000 mPa·s, more preferably 10000 to 50000 mPa·s, still more preferably 30000 to 50000 mPa·s in order to maintain the shape of the slurry and prevent the coarseness of the slurry at the time of drying (dehydration) described later.

### [Vacuum-Drying Step (S4)]

Subsequently, the slurry 12a, obtained by the stacking step (S3), on which the solid electrolytic layer 13 is stacked is vacuum-dried to form the constituent member of the all-solid-state battery in which the current collector 11, the electrode layer 12 and the solid electrolytic layer 13 are stacked (FIG. 1 - Vacuum-Drying Step (S4)). As illustrated in FIG. 2, by this step, a state in which the solid electrolytic layer 13 is stacked on the slurry 12a that is stacked on the current collector 11 is provided.

This vacuum-drying step (S4) can be performed under a related-art publicly-known condition for vacuum-drying the slurry that forms the electrode layer 12, such as the heating at 120°C or higher along with the vacuum reduction at 1.0 kPa or lower. The pressure in this step is preferably 1.3 kPa to 0.50 kPa, and the temperature therein is preferably 120°C to 150°C.

The feature parts in manufacturing the all-solid-state battery according to the present embodiment have been described above. For the constituent member formed after the series of operations of the kneading step (S1) to the vacuum-drying step (S4), an electrode layer to be paired is further formed on an opposite surface (other surface) of a surface (one surface) of the solid electrolytic layer 13 including the electrode layer 12 formed thereon to form a cell, and the all-solid-state battery can be provided.

A method of forming the other electrode layer described herein is not limited. However, the other electrode layer may be also formed by the series of operations of the kneading step (S1) to the vacuum-drying step (S4) as described above. In this case, the solid electrolytic layer 13, one surface of which already includes the electrode layer 12 formed thereon, is used as the solid electrolytic layer.

In the present embodiment, the above-described method for improving the contact state between the solid electrolytic layer and the electrode layer is preferably applied particularly to a part between the solid electrolytic layer and the positive electrode layer.

### [Raw Materials of Electrode Material]

The raw materials of the electrode material used in the present embodiment will be described below. As the raw materials, for example, the electrode active material is an essential component, and a conductive aid, a binder, a solid electrolyte and the like can be further used.

As the electrode active material described herein, a positive electrode active material is used for forming the positive electrode while a negative electrode active material is used for forming the negative electrode, and publicly-known materials can be used for these materials without any particular limitation. Note that the present embodiment is preferably applied for improving the contact state on the positive electrode layer side.

### (Positive Electrode Active Material)

Examples of the positive electrode active material used herein are MnO₂, LiCoO₂, LiMn₂O₄, LiNiO₂ and the like. Further, preferable examples are a conversion-type (also referred to as decomposition/synthesis reaction-type) or alloy reaction-type active material. Preferable examples of this positive electrode active material are CuCl₂, FeF₂, S, AgCl, FeCl₃, NiCl₂, CoCl₂, FeCl₂, Li₂S, LiCl, LiF, AgF, Br₂, LiBr, CoF₃, CuF₂, CuF, BiF₃, CuCl₂, NiF₂, LiI, I₂, CoF₂, FeF₃, MnF₃, CrF₃, CuS, Li₂Se, Se, CuSe, Cu₂O , CoS₂, Cu₂S, NiS, FeS₂, Te, Li₂Te, VF₃, FeS, CoSe₂, MnS₂, MnCl₂, Co₃S₄, FeSe, TiF₃, MnS and the like. Among them, CuCl₂, FeF₂, and S are preferable.

Note that, for example, transition metal halides (CuCl₂, FeF₂, FeCl₃ and the like) and alkali metal halides (LiCl, LiF and the like) are appropriate as the conversion-type active material, and the charging/discharging is performed by a chemical reaction including decomposition/synthesis caused between lithium and a metal compound. On the other hand, for example, Si, SiO, Sn, SnCl₂ and the like are appropriate as the alloy reaction-type active material, and the charging/discharging is performed by a reaction including formation of an Li alloy phase.

Such a positive electrode active material is contained as particles, and an average particle diameter (D50) based on a laser diffraction/light scattering method therefore is preferably about 0.1 µm to 20 µm, more preferably about 0.4 µm to 10 µm.

### (Negative Electrode Active Material)

In addition, examples of the negative electrode active material used herein are Zn, Li, graphite, Li₄Ti₅O₁₂ and the like, and besides, are conversion-type or alloy reaction-type and dissolution/precipitation reaction-type active materials such as Si-, Li-, Sn-, Mg-, and Al-based materials. Among them, the Si-, Li-, Mg-, and Al-based active materials are preferable in terms of a high energy density per weight or per volume.

Note that, for example, metallic LI, metallic Na and the like are appropriate as the dissolution/precipitation reaction-type active material, and the charging/discharging is performed by the dissolution/precipitation of such a metallic phase.

Examples of the Si-based negative electrode active material are Si, a mixture of Si and SiO₂ in which a composition ratio of Si and O is expressed as "1 : a (where 0.05 < a < 1.95)", a mixture of Si and SiC in which a composition ratio of Si and C is expressed as "1 : b (where 0 < b < 1)", a mixture of Si and Si₃N₄ in which a composition ratio of Si and N is expressed as "1 : c (where 0 < c < 4/3)" and the like.

In addition, other examples of the Si-based negative electrode active material are alloy materials made of Si and an element other than Si. Examples of the element other than Si described herein are Fe, Co, Sb, Bi, Pb, Ni, Cu, Zn, Ge, In, Sn, Ti and the like.

Examples of the Sn-based negative electrode active material are Sn, a Sn oxide, a Sn nitride, a Sn-containing alloy and the like, and solid solutions of these and the like. Some of Sn atoms contained in such a material may be substituted with one, two or more types of elements other than Sn.

Examples of the Sn oxide are tin oxide (SnO_{d} (0 < d < 2)), tin dioxide (SnO₂) and the like. Examples of the Sn-containing alloy are a Ni-Sn alloy, a Mg-Sn alloy, a Fe-Sn alloy, a Cu-Sn alloy, a Ti-Sn alloy and the like. Examples of the Sn compound are SnSiO₃, Ni₂Sn₄, Mg₂Sn and the like.

Examples of the Li-based negative electrode active material are Li, an In-Li alloy, an Al-Li alloy, a Mg-Li alloy, a Zn-Li alloy, a Sn-Li alloy, an Sb-Li alloy and the like.

Examples of the Mg-based negative electrode active material are Mg, a Ni-Mg alloy, a Sn-Mg alloy, a Fe-Mg alloy, a Cu-Mg alloy, a Ti-Mg alloy and the like.

Examples of the Al-based negative electrode active material are Al, a Ni-Al alloy, a Sn-Al alloy, a Fe-Al alloy, a Cu-Al alloy, a Ti-Al alloy and the like.

Such a negative electrode active material is contained as particles, and an average particle diameter (D50) based on a laser diffraction/light scattering method therefore is preferably about 1 µm to 20 µm, more preferably about 2 µm to 10 µm.

### (Conductive Aid)

Preferable examples of the conductive aid used herein are a carbon black such as acetylene black and other carbon materials (graphite, a carbon nanotube and the like).

### (Binder)

Preferable examples of the binder used herein are a fluorine-based binder such as polyvinylidene fluoride (PVDF) and polytetrafluoroethylene (PTFE) and a rubber-based binder such as styrene-butadiene rubber (SBR).

### (Solid Electrolyte)

In addition, examples of the solid electrolyte used herein are various oxide-based solid electrolytes and sulfide-based solid electrolytes.

Preferable examples of the oxide-based solid electrolyte are a crystalline oxide having a NASICON-type structure, a garnet-type structure, or a perovskite-type structure and the like. Such a material is expressed by, for example, a general formula "LiₓAO_{y}" (where the term "A" is B, C, Al, Si, P, S, Ti, Zr, Nb, Mo, Ta or W, and the terms "x" and "y" are positive numbers). Specific examples thereof are Li₃BO₃, LiBO₂, Li₂CO₃, LiAlO₂, Li₄SiO₄, Li₂SiO₃, Li₃PO₄, Li₂SO₄, Li₂TiO₃, Li₄Ti₅O₁₂, Li₂Ti₂O₅, Li₂ZrO₃, LiNbO₃, Li₂MoO₄, Li₂WO₄ and the like. In addition, preferable examples thereof are glasses or glass ceramics made of Li₂O-B₂O₃-P₂O₅-, Li₂O-SiO₂-, Li₂O-B₂O₃-, and Li₂O-B₂O₃-ZnO-based material or the like, not having a specific crystal structure.

From the viewpoint of having high ionic conductivity, it is particularly preferable to use the sulfide-based solid electrolyte. Examples thereof are glasses or glass ceramics made of Li₂S-SiS₂-, Li₂S-P₂S₃-, Li₂S-P₂S₅-, Li₂S-GeS₂-, Li₂S-B₂S₃-, Li₃PO₄-P₂S₅-, and Li₄SiO₄-Li₂S-SiS₂-based material or the like.

From the viewpoint of achieving higher ionic conductivity, it is preferable to use a Li₂S-based solid solution made of Li₂S and a lithium halide (such as LiCl, LiBr, LiI). Preferable examples thereof are LiBr-Li₂S-P₂S₅, LiI-Li₂S-P₂S₅, LiBr-LiI-Li₂S-P₂S₅ and the like.

Such a solid electrolyte is used as the particle form, and an average particle diameter (D50) thereof based on a laser diffraction/light scattering method therefore is, for example, preferably 0.1 µm to 10 µm, more preferably 0.4 µm to 5 µm.

### (Content Ratio of Raw Material)

If the electrode layer is formed to contain the electrode active material, the conductive aid, the binder, and the solid electrolyte, when it is assumed that respective content ratios on mass basis regarding these materials are expressed as "electrode active material : conductive aid : binder : solid electrolyte = x : y : z : v", the content ratios (mass %) of these materials are respectively preferably in ranges of "50 ≦ x ≦ 92.5", "2.5 ≦ y ≦ 45", "2.5 ≦ z ≦ 45", and "2.5 ≦ v ≦ 45". Further, the ratios of these materials are respectively more preferably in ranges of "65 ≦ x ≦ 92.5", "2.5 ≦ y ≦ 20", "2.5 ≦ z ≦ 15", and "2.5 ≦ v ≦ 20".

### [All-Solid-State Battery]

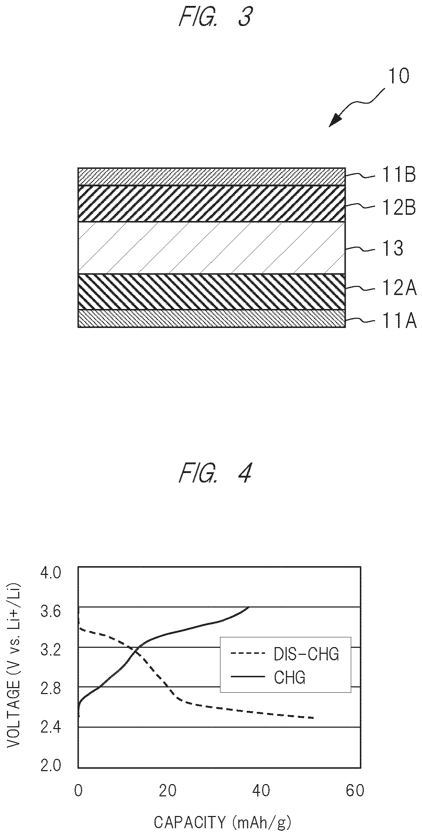

Next, the all-solid-state battery provided by the manufacturing method according to the embodiment will be described. The all-solid-state battery according to the present embodiment is, for example, an all-solid-state battery 10 including a positive electrode current collector 11A, a positive electrode layer 12A, the solid electrolytic layer 13, a negative electrode layer 12B and a negative electrode current collector 11B that are stacked in this order, as illustrated in FIG. 3.

In the following description, note that an all-solid-state lithium ion secondary battery is exemplified as an objective to which the technique disclosed herein is applied. However, the following description is not limited thereto. The all-solid-state battery described herein may be an all-solid-state battery of a type using other metal ion as a charge carrier, such as sodium ion secondary battery and magnesium ion secondary battery.

### <Positive Electrode Current Collector>

For the positive electrode current collector 11A, a material used as a positive electrode current collector of such a battery type can be used without any particular limitation. Typically, a metallic positive electrode current collector having favorable conductivity is preferable, and is made of a metal material such as aluminum, nickel, titanium, stainless steel, copper, and such a metal coated with carbon coat (primer coated foil). Particularly, a current collector having a wide potential window is preferable because of providing a high capacity by charging/discharging in a wide voltage range. As a material of such a current collector, stainless steel (such as stainless steel foil) is preferable. The stainless steel is of a ferrite type, a martensite type, an austenite type or the like, depending on its structure. However, the type is not particularly limited. Although not particularly limited, a thickness of the positive electrode current collector 11A is preferably about 5 µm to 50 µm, more preferably about 8 µm to 30 µm, because of balance between a capacity density of the battery and a strength of the current collector.

### <Negative Electrode Current Collector>

For the negative electrode current collector 11B, a material used as a negative electrode current collector of such a battery type can be used without any particular limitation. Typically, a metallic negative electrode current collector having favorable conductivity is preferable, and, for example, stainless steel, copper (such as copper foil), an alloy mainly containing copper or the like can be used. Although not particularly limited, a thickness of the negative electrode current collector 11B is preferably about 5 µm to 50 µm, more preferably about 8 µm to 30 µm, because of balance between a capacity density of the battery and a strength of the current collector.

### <Positive Electrode Layer>

The positive electrode layer 12A used in the present embodiment is a positive electrode layer containing a positive electrode active material. The positive electrode active material described herein means a material relating to occlusion and release of the charge carrier (such as the lithium ion in the lithium ion secondary battery) on the positive electrode side.

The positive electrode active material used herein is contained as particles, and its average particle diameter (D50) based on a laser diffraction method is, for example, preferably about 0.5 µm to 20 µm, more preferably about 1 µm to 10 µm.

The positive electrode layer 12A can contain a conductive aid, a binder, a solid electrolyte or others in addition to the positive electrode active material. The positive electrode layer 12A can further contain various optional components as similar to those of the positive electrode layer of such a battery type of the related art.

Note that a thickness of the positive electrode layer 12A is, for example, preferably in a range of 10 µm to 500 µm although not particularly limited.

### <Negative Electrode Layer>

The negative electrode layer 12B used in the present embodiment is a negative electrode layer containing a negative electrode active material. The negative electrode active material described herein means a material relating to occlusion and release of the charge carrier (such as the lithium ion in the lithium ion secondary battery) on the negative electrode side.

The negative electrode layer 12B can contain a binder, a solid electrolyte or others in addition to the negative electrode active material. The negative electrode layer 12B can further contain various optional components as similar to those of the negative electrode layer of such a battery type of the related art.

Note that a thickness of the negative electrode layer 12B is, for example, preferably in a range of 10 µm to 500 µm although not particularly limited.

### <Solid Electrolytic Layer>

The solid electrolytic layer 13 used in the present embodiment can be made of a publicly-known solid electrolytic layer used in the all-solid-state battery, and can contain various solid electrolytes as similar to those of the related art without any particular limitation.

This solid electrolytic layer 13 is configured to be formed between and be in contact with the positive electrode layer 12A and the negative electrode layer 12B as illustrated in FIG. 3 so that the charge carrier such as the lithium ion is movable therebetween. This solid electrolytic layer 13 also plays a role of a separator, and prevents the short-circuit between the positive electrode layer 12A and the negative electrode layer 12B while transmitting the lithium ion.

In this case, as a material for forming the solid electrolytic layer 13, a material of the same type as that of the sold electrolytes described in the positive electrode layer 12A and the negative electrode layer 12B can be preferably used. Therefore, the detailed description for the components is omitted.

As described above, the all-solid-state battery and the method of manufacturing the all-solid-state battery in the present embodiment can improve the contact state between the electrode layer and the solid electrolytic layer, thereby providing the all-solid-state battery that achieves the efficient charging/discharging. In addition, the improvement in the contact states between both electrode layers and the solid electrolytic layer achieves the charging/discharging without the pressurization or the like, and therefore, the all-solid-state battery that achieves the charging/discharging by the simple configuration and operation can be provided.

### [Examples]

The present embodiment will be described below in further detail with reference to examples.

### (Working Example 1)

The raw materials were prepared to have content ratios of copper chloride (CuCl₂) of 65.02 mass% serving as the positive electrode active material, Li₂O-Ai₂O₃-SiO₂-P₂O₅-TiO₂-based solid electrolyte (Product Name: LICGC-PW01 produced by OHARA INC.,) of 12.50 mass% serving as the solid electrolyte, acetylene black of 12.51 mass% serving as the conductive aid, and polyamideimide of 9.97 mass% serving as the binder. These raw materials were mixed while using N-methyl-2-pyrrolidone (NMP) as the solvent, and were kneaded while being defoamed and stirred at a rotation speed of 500 rpm, a revolution speed of 1000 rpm under an ordinary pressure for 5 minutes by a revolution-rotation mixer (THINKY MIXER (that is a name of a product produced by Thinky corporation)) to provide the slurry for coating.

This slurry was applied onto the substrate made of the stainless steel to have a thickness of 150 µm by using a bar coater, and then, a plate-like Li₂O-Al₂O₃-SiO₂-P₂O₅-TiO₂-based solid electrolyte (product name: LICGC-AG01 produced by OHARA Inc.; Thickness: 0.150 mm) was stacked on the slurry. A stacked body made of the stainless-steel-plate/slurry/solid-electrolytic-layer was vacuum-dried under a pressure of 1.3 kPa or lower at a temperature of 150°C for 12 hours to provide a component member including the positive electrode having the positive electrode layer with a thickness equivalent to 50 µm.

Further, the negative electrode and the negative electrode current collector were stacked on a surface (that is an opposite surface of a surface where the positive electrode layer was formed) of the solid electrolytic layer of this component member to manufacture an all-solid-state battery 1.

The negative electrode layer used herein adopts a stainless-steel substrate including the negative electrode current collector made of a plate-like member made of graphite of 49.91 mass% as the negative electrode active material, lithium-lanthanum zirconate (LLZ) of 40.06 mass% as the solid electrolyte, and polyamide of 10.03 mass% as the binder.

### (Comparative Example 1)

As similar to the Working Example 1, this slurry was applied onto the substrate made of the stainless steel to have a thickness of 150 µm by using a bar coater, and then, was vacuum-dried under a pressure of 1.3 kPa at a temperature of 150°C for 12 hours to provide the positive electrode current collector having the positive electrode layer with a thickness of 50 µm.

Then, a plate-like Li₂O-Al₂O₃-SiO₂-P₂O₅-TiO₂-based solid electrolyte (Product Name: LICGC-AG01 produced by OHARA INC.; Thickness: 0.150 mm) was stacked as the solid electrolytic layer on the positive electrode layer, and besides, the negative electrode layer and the negative electrode current collector were stacked on this solid electrolytic layer to manufacture an all-solid-state battery C1.

### (Examination Example)

Respective charging/discharging characteristics of the all-solid-state battery 1 obtained in the Working Example 1 and the all-solid-state battery C1 obtained in the Comparative Example 1 were examined.

The charging/discharging characteristics were examined under conditions of a charging/discharging mode: CC, an ambient temperature: 50°C, a cutoff voltage: 3.6 to 2.4 V, and a charging/discharging rate: 0.01 C without the pressurization on the all-solid-state battery. FIG. 4 illustrates a charging/discharging result in the Working Example 1 obtained in this examination.

According to FIG. 4, it has been confirmed that the all-solid-state battery 1 can be charged/discharged. On the other hand, it has been confirmed that the all-solid-state battery C1 cannot be charged/discharged under the conditions without the pressurization.

This result reveals that the all-solid-state battery according to the present embodiment can achieve its function even without being charged/discharged under the pressurization as in the related art, and can exhibit the charging/discharging characteristics even in the simple configuration.

In the foregoing, the present invention has been concretely described based on the embodiments. However, it is needless to say that the present invention is not limited to the foregoing embodiments, and various modifications can be made within the scope of the present invention.

### EXPLANATION OF REFERENCE CHARACTERS

10 all-solid-state battery
11 current collector
11A positive electrode current collector
11B negative electrode current collector
12 electrode layer
12A positive electrode layer
12B negative electrode layer
13 solid electrolytic layer

## Claims

1. A method of manufacturing an all-solid-state battery comprising steps of:
forming slurry by kneading raw materials including an electrode active material;
applying the slurry onto a current collector;
stacking a solid electrolytic layer onto the applied slurry not dried yet; and
forming an electrode layer by vacuum-drying the slurry on which the solid electrolytic layer is stacked.

2. The method of manufacturing the all-solid-state battery according to claim 1,
wherein a viscosity of the slurry at 25°C is 5000 to 50000 mPa·s.

3. The method of manufacturing the all-solid-state battery according to claim 1,
wherein the raw materials further include a conductive aid, a binder and a solid electrolyte, and,
when it is assumed that respective content ratios on mass basis regarding the electrode active material, the conductive aid, the binder and the solid electrolyte are expressed as "electrode active material : conductive aid : binder : solid electrolyte = x : y : z : v", the content ratios (mass%) of these materials are in ranges of "50 ≦ x ≦ 92.5", "2.5 ≦ y ≦ 45", "2.5 ≦ z ≦ 45", and "2.5 ≦ v ≦ 45".

4. The method of manufacturing the all-solid-state battery according to claim 3,
wherein the electrode active material is a positive electrode active material.

5. The method of manufacturing the all-solid-state battery according to claim 4,
wherein the electrode active material is a conversion-type active material or an alloy reaction-type active material.

6. The method of manufacturing the all-solid-state battery according to claim 5,
wherein the electrode active material is made of a material selected from CuCl₂, FeF₂ and S.

7. The method of manufacturing the all-solid-state battery according to claim 6,
wherein stainless steel is used as the current collector.
